# EUROPEAN PATENT APPLICATION

(11) **EP 4 804 436 A1**
(43) Date of publication of application: **09.09.2026**
(21) Application number: 25290010.5
(22) Date of filing: 04.03.2025
(51) Int. Cl.: H04L 1/00

(54) **DATA TRANSMISSION BETWEEN TWO COMMUNICATION UNITS**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: Corlay, Vincent, 35708 RENNES CEDEX 7 (FR); Sibel, Jean-Christophe, 35708 RENNES CEDEX 7 (FR); Gresset, Nicolas, 35708 RENNES CEDEX 7 (FR)
(74) Representative: Plasseraud IP

(57) **Abstract**

A process for transmitting data between two communication units comprises selecting a transmitter coding scheme based on at least two communication criteria assessed for several modulation and coding schemes. The communication criteria may be assessed using an interference model, and the process is compatible with implementing superposition coding. The at least two communication criteria may be an expected rate and a variance or standard deviation of an instantaneous rate of the data transmission. The process allows selecting the transmitter coding scheme such that it suits the interference model according to a trade-off rule applied to the communication criteria.

## Description

The invention relates to a process for transmitting data between two communication units, a communication unit that uses the process, and computer program products useful for implementing the process.

### -- BACKGROUND OF THE INVENTION --

Modulation and coding schemes are used by communication units transmitting data through a radio channel for mapping the data bits to radio symbols. Each modulation and coding scheme allows determining a transmission throughput and defines how the transmitted data are protected against errors, in particular by adding redundancy. Selection of a modulation and coding scheme by a communication unit that is involved in an ongoing communication, also referred to as link adaptation, consists in making a trade-off between the transmission throughput and the robustness to noise and interference due to the environment and also to other radio sources possibly being transmitting. A usual approach consists in estimating the signal-to-noise ratio (SNR) or signal-to-interference-and-noise ratio (SINR) of the radio channel and selecting the modulation and coding scheme to be used, referred to as transmitter coding scheme, close to the channel capacity as resulting from the estimated signal-to-noise ratio or signal-to-interference-and-noise ratio. Thus, the expected rate, i.e. the average data transmission rate, determined based on the amount of noise in the channel is the single criterion used in prior art for selecting the transmitter coding scheme. A back-off is often further used to account for a possible operational loss of the transmitter coding scheme and for channel capacity misestimation. In this way, the transmitter coding scheme is selected to maximize the expected rate.

Thus, selection of the transmitter coding scheme as commonly carried out does not consider fluctuations of the instantaneous rate, in particular such fluctuations due to at least one existing intermittent interferer.

In prior art, the outage probability is proposed for block-fading multi-path channel, but it is not combined with another criterion for assessing performance of a modulation and coding scheme, and not considered in connection with interference.

Furthermore, superposition coding is a method that allows combining two or more modulation and coding schemes, then referred to as base modulation and coding schemes, for producing a new modulation and coding scheme. Using superposition coding for producing a new modulation and coding scheme requires providing a power distribution key that determines a distribution of the transmission power of the data transmitting unit between the base modulation and coding schemes. More details about superposition coding can be found in the article "Optimal Sensing Policy With Interference-Model Uncertainty", by V. Corlay, J-C. Sibel and N. Gresset, DOI: 10.4855/ arXiv.2406.06280, October 10, 2024.

Starting from this situation, one object of the present invention consists in improving link adaptation compared to prior art. In particular, it aims at proposing a new link adaptation process that better takes into account the intermittent nature of interferences.

### -- SUMMARY OF THE INVENTION --

For meeting at least one of these objects or others, a first aspect of the present invention proposes a process for transmitting data between two communication units, comprising the following steps:
/1/ selecting a transmitter coding scheme in a library of several modulation and coding schemes which includes modulation and coding schemes that each implement or not superposition coding; and
/2/ transmitting the data from one of the communication units to the other communication unit using the transmitter coding scheme.

According to the invention, step /1/ comprises the following sub-steps:
/1-1/ assessing at least two communication criteria for each of at least two modulation and coding schemes contained in the library; and
/1-2/ selecting the transmitter coding scheme to be used in step /2/ among the at least two modulation and coding schemes involved with sub-step /1-1/, according to a trade-off rule applied to the at least two communication criteria.

Thus, the invention provides selecting the transmitter coding scheme by taking into account at least two communication criteria, which allows selection results which are more optimized compared to selections based on a single criterion. Such multi-criteria selection better suits some communication conditions, in particular when one or more radio sources produce(s) interferences.

In various implementations of the invention process, the at least two communication criteria may comprise for each modulation and coding scheme:
a forecast throughput value relating to data transmission using the modulation and coding scheme; and
a parameter quantifying fluctuations of an effective rate relating to data transmission using the modulation and coding scheme, called fluctuation parameter.

Indeed, having a low fluctuation parameter may be a stringent requirement, for instance if communication stabilization is required, such as with ultra-reliable low-latency communication.

In preferred implementations, the fluctuation parameter may be a standard deviation, or equivalently a variance, of the effective rate relating to the data transmission, or an outage probability of the data transmission. For instance, the outage probability of the data transmission may be the probability value for the difference between the instantaneous rate and the expected rate to be greater than a threshold. Possibly, the instantaneous rate may be the amount of information obtained per transmission duration when decoding one data packet, or also the average amount of information obtained per transmission duration when decoding a limited number of data packets.

Also preferably, the forecast throughput value may be an expected effective rate, also called average effective rate as opposed to predicted average rate, relating to the data transmission.

In preferred implementations, the trade-off rule that is applied in sub-step /1-2/ may comprise selecting the modulation and coding scheme that achieves a highest forecast throughput value for a given value of the fluctuation parameter, or may comprise selecting a lowest value of the fluctuation parameter for a given forecast throughput value.

When the communication criteria comprise the forecast throughput value and the fluctuation parameter, the trade-off rule that is applied in sub-step /1-2/ may further involve at least one another criterion for selecting the transmitter coding scheme, this another criterion belonging to a criteria list comprised of an implementation complexity of the modulation and coding scheme, and an operational performance loss of the modulation and coding scheme due to operational constraints related to superposition coding. The selection of the transmitter coding scheme can thus account for more constraints, including constraints internal to the communication units.

Generally for the invention, the at least two modulation and coding schemes involved with sub-step /1-1/ may be each determined by:
a forecast throughput value if the modulation and coding scheme does not implement superposition coding; or
if the modulation and coding scheme implements superposition coding: a key for determining a distribution of a transmission power between base modulation and coding schemes that are superposed, and a respective forecast throughput value for each of the base modulation and coding schemes.

Also generally for the invention, an interference model may be used for assessing the at least two criteria for each of the at least two modulation and coding schemes involved with sub-step /1-1/. Possibly, this interference model may comprise setting a plurality of interference levels with a respective probability value allocated to each interference level, the probability value quantifying a probability for the corresponding interference level to be effective at any time. Such interference model well accounts for the intermittent nature of an interferer. When such interference model assuming several interferers is used, and when at least one of the modulation and coding schemes that are involved with sub-step /1-1/ implements superposition coding, a number of the base modulation and coding schemes that are superposed in each of this (these) modulation and coding scheme(s) may be preferably less than or equal to the number of the interference levels set by the interference model. Such limitation for the layer number in the superposition reduces the implementation complexity of the modulation and coding scheme that results from the superposition coding, while equality between the number of layers in the superposition and the number of interference levels allows correct fitting to the actual interference configuration.

A second aspect of the invention proposes a communication unit configured for transmitting data to a recipient communication unit using a transmitter coding scheme, the communication unit comprising:
- means for storing a library of several modulation and coding schemes which includes modulation and coding schemes that each implement or not superposition coding;
- means for assessing at least two criteria for each of at least two modulation and coding schemes from the library; and
- means for selecting the transmitter coding scheme among the at least two modulation and coding schemes, according to a trade-off rule applied to the at least two communication criteria.

Such communication unit may be configured for implementing a process according to the first invention aspect.

In preferred embodiments, the means for assessing the at least two criteria may be configured for implementing a theoretical performance prediction model that calculates the at least two criteria for each modulation and coding scheme inputted into this theoretical performance prediction model. To this end, the theoretical performance prediction model may use an interference model that sets a plurality of interference levels with a respective probability value allocated to each interference level, the probability value quantifying a probability for the corresponding interference level to be effective at any time. In addition, the means for selecting the transmitter coding scheme may be .configured for receiving the at least two criteria for each modulation and coding scheme as calculated by the theoretical performance prediction model, and possibly further receiving at least one another criterion for each modulation and coding scheme, this another criterion belonging to a criteria list comprised of an implementation complexity of the modulation and coding scheme, and an operational performance loss of the modulation and coding scheme due to operational constraints related to superposition coding.

A third aspect of the invention proposes a first computer program product for selecting a transmitter coding scheme, comprising code instructions such that when run by a processor, this first computer program product causes the processor to:
- receive at least two communication criteria for each of at least two modulation and coding schemes; and
- selecting the transmitter coding scheme among the at least two modulation and coding schemes, according to a trade-off rule applied to the at least two communication criteria.

Such a first computer program product may be useful for implementing the process of the first invention aspect. It may be implemented within the means for selecting the transmitter coding scheme in the communication unit of the second invention aspect.

Finally, a fourth aspect of the invention proposes a second computer program product for implementing a theoretical performance prediction model, comprising code instructions such that when run by a processor, this second computer program product causes the processor to:
- receive an interference model setting a number of interference levels with a respective probability value allocated to each interference level, the probability value quantifying a probability for the corresponding interference level to be effective at any time;
- receive a modulation and coding scheme; and
- calculating at least two communication criteria for the received modulation and coding scheme, using the interference model.

Such a second computer program product may also be useful for implementing the process of the first invention aspect. It may be implemented within the means for assessing the at least two criteria for each modulation and coding scheme in the communication unit of the second invention aspect.

These and other features of the invention will be now described with reference to the appended figures, which relate to preferred but not-limiting embodiments of the invention.

### -- BRIEF DESCRIPTION OF THE DRAWINGS --

Figure 1 shows two radiocommunication units being transmitting data from one to another.
Figure 2 is a block diagram of modules internal to the data transmitting communication unit of Figure 1, for implementing the invention process.
Figures 3a to 3d are two-dimensional diagrams that illustrate implementations of the invention process.

### -- DETAILED DESCRIPTION OF THE INVENTION --

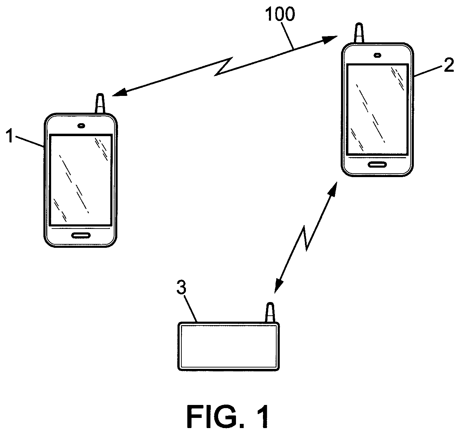

Referring to Figure 1, two communication units 1 and 2 are transmitting data from one to another through a radio channel 100. For illustrating purpose, the communication unit 1 is currently sending data to the communication unit 2 which is in a state of receiving these data. The data transmission is subjected to radio noise, and possibly also to interference with radio signals produced by another radio source 3, called interferer. Possibly, several interferers that may be independent from each other may affect the data transmission from the communication unit 1 to the communication unit 2.

In the exemplifying implementations of the invention that are described below, the expected effective rate, also called expected rate for short, constitutes the forecast throughput value mentioned in the general part of the description, and the variance of the instantaneous rate constitutes the fluctuation parameter. The standard deviation of the instantaneous rate may be used alternatively to the variance as the fluctuation parameter.

Assuming now in a first example that only one interferer may be active, of intermittent type with probability value denoted p and interference power I at the communication unit 2. Such basic interference model thus sets one non-zero interference level I that is effective when the interferer is active, in addition to zero value as another interference level effective when the interferer is not active. The interference model thus involves two interference levels. The probability value p relates to the interference level I being effective at any time, and probability value 1-p relates to the zero interference level being effective at any time. It is further assumed that each interference level remains for a duration longer than the codeword transmission time. This two-level interference model generates two values for the signal-to-interference-and-noise ratio:
SINR₁ in time intervals where the interference level I is effective, and
SINR₂ in other time intervals where the interference level 0 is effective.

SINR₁ is less than SINR₂ due to interference combining with noise when the interferer is active. Assuming that additive white Gaussian noise applies and is constant, Shannon's theory provides the channel capacity C for the radio channel 100, i.e. the highest achievable transmission rate on the radio channel 100, according to the following formula as a function of the signal-to-interference-and-noise ratio SINR: C(SINR)=0.5·log(1+SINR). Consequently, the intermittent interferer induces two channel capacity values: C(SINR₁) and C(SINR₂), C(SINR₁) being less than C(SINR₂).

In this first example, MCS₁ and MCS₂ are two modulation and coding schemes without superposition coding that respectively suit C(SINR₁) and C(SINR₂) with respective expected theoretical rates R₁ and R₂, namely such that R₁ ≤ C(SINR₁) < R₂ ≤ C(SINR₂). It is assumed that either MCS1 or MCS2 is to be selected by the communication unit 1 for transmission of the data, thus forming so-called transmitter coding scheme. Then:
if MCS₁ is selected by the communication unit 1 for transmitting the data to the communication unit 2, the error rate is low and the transmission rate is always R₁. Hence, in case of MCS₁ being selected:
   the expected rate is R₁, and
   the variance of the rate is 0
if MCS₂ is selected by the communication unit 1, the error rate is low when the interferer is not active and the transmission rate then being R₂, and the error rate is high when the interferer is active and the transmission rate then being close to zero. Hence, in case of MCS₂ being selected:
   the expected rate is Eₚ[R] = R₂·(1-p) + 0·p using averaging over time, i.e. Eₚ[R] = R₂·(1-p), and
   the variance of the rate is Vₚ(R) = (R₂ - Eₚ(R])²·(1-p) + (0 - Eₚ[R])²·p.

Hence selecting MCS₂ instead of MCS₁ may yield a higher expected rate depending on p-value, but the fluctuation parameter is always lower if MCS₁ is selected compared to selection of MCS₂. Indeed, the instantaneous rate is close to 0 with probability p if MCS₂ is selected. The present invention completes this analysis of the two-level interference model without superposition coding by involving a possibility of prioritizing either higher expected rate or lower variance for selection of either MCS₁ or MCS₂ as the transmitter coding scheme.

A second example relates again to the two-level interference model, but the transmitter coding scheme is produced through a two-layer superposition coding. The interference model involves again the interference levels 0 and I with the respective probability values 1-p and p as in the first example. Both modulation and coding schemes MCS₁ and MCS₂ are considered again with R₁ ≤ C(SINR₁) < R₂ = C(SINR₂), and they are used as base modulation and coding schemes in the superposition coding implementation with respective transmission power values to be allocated. Let P be the average transmission power per radio symbol for the communication unit 1, and N again the radio noise level.

On the transmitter side, i.e. for the communication unit 1, the sum of the two following codes is transmitted using the power distribution constant α comprised between 0 and 1 as a power distribution key when implementing superposition coding:
a first codeword for MCS₂ with allocated power α·P and expected theoretical rate R₂(α)=C(α·P/N), where C denotes again the Shannon's function for the channel capacity; and
a second codeword for MCS₁ with allocated power (1-α)·P and expected theoretical rate R₁(α)=C((1-α)·P/(α·P+N+I) since the power allocated to the first codeword then adds with the total noise-and-interference level N+I when the interferer is active.

On the receiver side, the communication unit 2 first tries to decode the second codeword in accordance with the superposition coding principle. It is always or almost always successfully decoded regardless of the interferer being active or not because MCS₁ suits to the worst case of the interferer being active. Then, this second codeword is subtracted to the received radio signal and the communication unit 2 tries to decode the first codeword from the subtraction result. The first codeword can be successfully decoded only when the interferer is not active because MCS₂ suits only to the case of the interferer not being active.

Hence, the instantaneous rate equals the sum of the respective rates of both MCS₁ and MCS₂ when the interferer is not active, i.e. the interference-and-noise level being N, and the instantaneous rate equals the rate of MCS₁ only when the interferer is active, the interference-and-noise level being then N+I. Using again averaging over time with probability value p for the interferer to be active, the expected rate is therefore: ${E}_{p} \left[R\left(α, p\right)\right] = \left({R}_{1}\left(α\right)+{R}_{2}\left(α\right)\right) ⋅ \left(1-p\right) + {R}_{1} \left(α\right) ⋅ p$

The present description adds the calculation of the variance of the rate as follows, again using averaging over time according to the probability value p: ${V}_{p} \left[R\left(α, p\right)\right] = {\left({R}_{1}\left(α\right)+{R}_{2}\left(α\right)-{E}_{p}\left[R\left(α, p\right)\right]\right)}^{2} ⋅ \left(1-p\right) + {\left({R}_{1}\left(α\right)-{E}_{p}\left[R\left(α, p\right)\right]\right)}^{2} ⋅ p$

Thus the power distribution constant α influences both the expected rate and the variance of the instantaneous rate for this two-layer superposition coding scheme. Therefore, selecting the α-value will allow prioritizing either higher expected rate or lower variance, or implementing a trade-off between both of them. The present invention allows such selection for supplying the transmitter coding scheme in such case of two-layer superposition coding.

The interference model in the preceding second example involved only two interference levels: 0 when the single interferer is not active and I when active. If there are more than two interference levels due to the number of interferers being higher than one in the considered interference model, more than two layers are preferably required in the superposition coding implementation to obtain the transmitter coding scheme. The third example now provided corresponds to three interference levels set by the interference model and three layers in the superposition coding implementation.

Let lᵢ be the three interference levels and pᵢ the respective probability value for each interference level, index i equalling 1, 2 and 3: l₁=0 with associated probability value p₁ for no interferer being active, first non-zero interference level l₂ with associated probability value p₂, and second non-zero interference level l₃ with associated probability value p₃.

Using the triplet (α₁, α₂, α₃) where α₁, α₂, α₃ are each a non-zero positive number with α₁+α₂+α₃=1, as the power distribution key for the three-layer superposition coding, the respective rates for the layers are the following: ${R}_{1} = C \left({α}_{1}⋅P/\left(N+{I}_{1}\right)\right.$ for the layer decoded last, ${R}_{2} = C \left({α}_{2}⋅P/\left(P⋅{α}_{1}+N+{I}_{2}\right)\right.$ for the layer decoded second, and ${R}_{3} = C \left({α}_{3}⋅P/\left(P⋅{α}_{1}+P⋅{α}_{2}+N+{I}_{3}\right)\right.$ for the layer decoded first.

Similarly as above, the expected rate and the variance of the instantaneous rate can be calculated as follows: ${E}_{p} \left[R\left(α, p\right)\right] = \left({R}_{3}+{R}_{2}+{R}_{1}\right) ⋅ {p}_{1} + \left({R}_{3}+{R}_{2}\right) ⋅ {p}_{2} + {R}_{3} ⋅ {p}_{3} ,$ and ${V}_{p} \left[R\left(α, p\right)\right] = {\sum }_{i = 1 , 2 , 3} {\left(R′-{E}_{p}\left[R\left(α, p\right)\right]\right)}^{2} ⋅ {p}_{i}$ where R' is the instantaneous rate.

The values of the expected rate and the variance of the instantaneous rate thus depend on the power distribution key (α₁, α₂, α₃). Hence, adjusting the values of α₁, α₂ and α₃ allows selecting the transmitter coding scheme when it is produced by implementing three-layer superposition coding. It allows again to make a trade-off between higher expected rate and lower variance of the instantaneous rate.

However, it is possible to reduce the layer number in the superposition coding, for reducing the implementation complexity of the resulting transmitter coding scheme. For example, in a case of three interference levels but only two layers in the superposition coding implementation, it yields the following channel capacity values: ${R}_{1} = C \left(α⋅P/\left(N+{I}_{k 1}\right)\right.$ with k1 being either 1 or 2, and ${R}_{2} = C \left(\left(1-α\right)⋅P/\left(P⋅α+N+{I}_{k 2}\right)\right.$ with k2 being either k1 or 3.

Thus, there are now two additional variables to optimize: k1 and k2 in addition to the power distribution parameter α. Indeed, since the number of layers is restricted, one must decide whether the second modulation and coding scheme should be robust to all interference levels, corresponding to k2=3, or robust to only the two lowest ones, corresponding to k2=2. Similarly, one must also decide whether the first modulation and coding scheme should be robust to the two lowest interference levels, corresponding to k1=2, or robust only to the lowest one, i.e. when no interference, corresponding to k1=1.

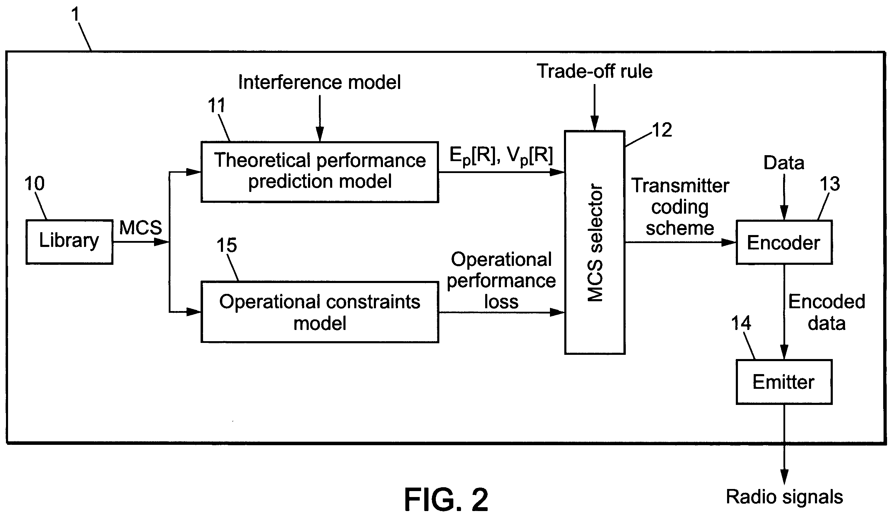

A possible architecture for the communication unit 1 to implement trade-off between both communication criteria, e.g. the expected rate Eₚ[R] and the variance Vₚ[R] of the instantaneous rate, is now described with reference to Figure 2.

Reference number 10 denotes a library of modulation and coding schemes (MCS), including modulation and coding schemes produced by superposition coding. For modulation and coding schemes without superposition coding, each may be determined by a predicted value for the expected rate. In case of superposition coding, the modulation and coding scheme includes the number of layers involved in the superposition and a power distribution key to be determined, and possibly further variable parameters such as the above k1- and k2 integers when the layer number is less than the number of interference levels set by the interference model.

At least two modulation and coding schemes, possibly in the form of at least one modulation and coding scheme produced by superposition coding but with the superposition parameters not yet determined, is supplied from the library 10 to a theoretical performance prediction model 11. The theoretical performance prediction model 11 is an embodiment of the means for assessing the at least two criteria for each modulation and coding scheme as mentioned in the general part of the description. The theoretical performance prediction model 11 is also supplied with an interference model, that provides a set of interference levels with respective probability values as exemplified above. Based on the received modulation and coding schemes and the interference model, the theoretical performance prediction model 11 calculates at least two communication criteria, e.g. the expected rate Eₚ[R] and the variance Vₚ[R] of the instantaneous rate as implemented in the above examples. The communication criteria are calculated for each modulation and coding scheme inputted into the theorical performance prediction model 11, or for several value sets for the power distribution key in case of superposition coding. The results for the communication criteria are inputted for each modulation and coding scheme into a selector 12, noted MCS selector in the figure and called means for selecting the transmitter coding scheme in the general part of the description. The selector 12 is additionally supplied with a trade-off rule, and it selects one of the modulation and coding schemes by applying the trade-off rule to the results for the communication criteria calculated for each modulation and coding scheme. Possibly, the trade-off rule may be of Pareto type, for example consisting in selecting first one or several acceptable value(s) for the expected rate and then selecting the modulation and coding scheme that minimizes the variance of the instantaneous rate. Another Pareto-type trade-off rule may be selecting first one or several acceptable value(s) for the variance of the instantaneous rate and then selecting the modulation and coding scheme that maximizes the expected rate. Other types of trade-off rules are possible alternatively. The selector 12 outputs the selected modulation and coding scheme as the transmitter coding scheme to be used for transmitting the data. Then, this transmitter coding scheme is inputted into a data encoder 13 in a usual way, and the encoded data are transmitted to an emitter 14 for producing the radio signals.

However, operational performance losses may affect each modulation and coding scheme when implemented in both communication units 1 and 2. For example, when superposition coding is implemented, adding one more layer implies encoding and decoding an additional code. Moreover, considering the rate of the first code to be decoded, the noise that is induced by the second code to be decoded may not be perfectly Gaussian and therefore the real channel capacity may be lower than the theoretical one as resulting from the Shannon's formula. As a result, adding a further layer in the superposition coding implementation may cause an operational performance loss such that addition of this further layer is not worth if only a marginal theoretical gain is expected from the results outputted by the theoretical performance prediction model 11. For considering such operational performance losses in the selection of the transmitter coding scheme, the communication unit 1 may optionally further comprise an operational constraints model 15 that assesses the operational performance loss for each modulation and coding scheme processed by the theoretical performance prediction model 11. The results for the operational performance losses can be transmitted to the selector 12 in parallel with the results for the at least two communication criteria, so that these operational performance losses are also considered for selecting the transmitter coding scheme. To this purpose, the trade-off rule is appropriately completed for considering the operational performance losses.

The selector 12 may also consider an implementation complexity of each modulation and coding scheme processed by the theoretical performance prediction model 11, by using an appropriate trade-off rule that also addresses the implementation complexity.

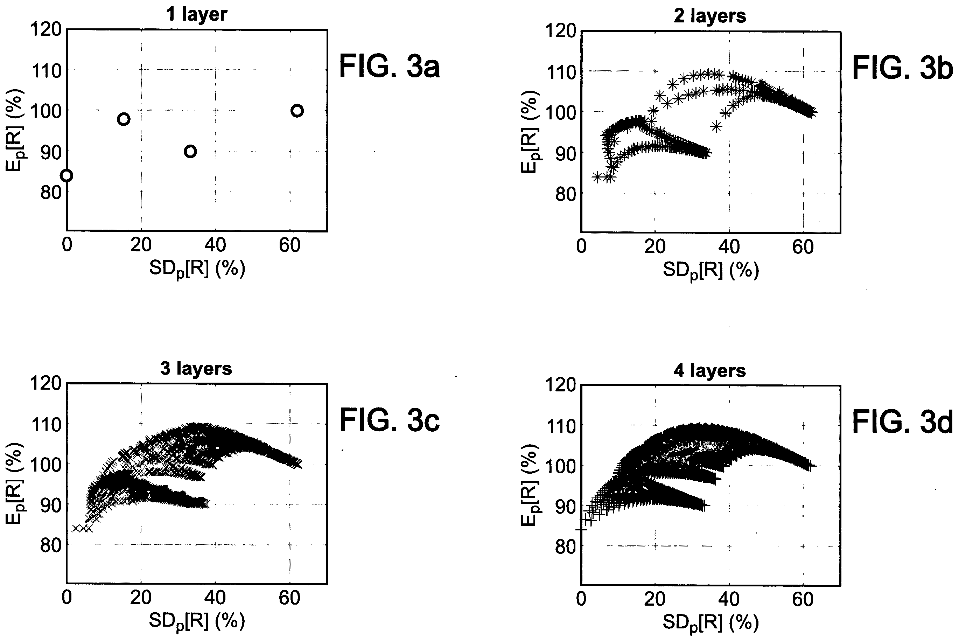

Figures 3a to 3d are diagrams that display each results provided by the theoretical performance prediction model 11 when the used communication criteria are the expected rate Eₚ[R] and the standard deviation SDₚ[R]=Vₚ[R]^{1/2} of the instantaneous rate. Each data point in these diagrams indicates a respective modulation and coding scheme. The expected rate Eₚ[R] and the standard deviation SDₚ[R] are both expressed as percentage values with respect to the expected rate of the modulation and coding scheme that appears with 100% as y-value in the diagram of Figure 3a. The results have been calculated using an interference model that sets four distinct interference levels. They have been first obtained separately for four base modulation and coding schemes as displayed in the diagram of Figure 3a and referred to as one-layer implementations, and also for superposition coding combinations each involving two layers for the diagram of Figure 3b, three layers for the diagram of Figure 3c and four layers for the diagram of Figure 3c, using the same base modulation and coding schemes as the one-layer implementations.

First, one can observe in these diagrams that numerous modulation and coding schemes are not optimal. Indeed, one modulation and coding scheme may be considered as Pareto-optimal, i.e. located on the Pareto front, if it has the highest expected rate value for a given standard deviation value of the instantaneous rate and, among the modulation and coding schemes having this expected rate, the lowest standard deviation value.

Many Pareto-optimal trade-offs are not achievable if using only one layer for producing the modulation and coding schemes that are inputted into the theoretical performance prediction model 11. Moreover, although the base modulation and coding scheme having approximately 35% in standard deviation of the instantaneous rate is on a Pareto front, it is unlikely to be selected because another base modulation and coding scheme with a lower value of about 18% in standard deviation has a higher value for the expected rate.

With two layers involved in the superposition coding (Figure 3b), significantly more value pairs for the expected rate and standard deviation can be achieved compared to the one-layer implementations. Moreover, higher values for the expected rate with lower values for the standard deviation of the instantaneous rate become possible.

With three layers (Figure 3c) and four layers (Figures 3d) involved in the superposition coding, the performance only marginally increases in some parts of the Pareto front compared to the two-layer superposition coding results (Figure 3b).

## Claims

1. A process for transmitting data between two communication units (1, 2), comprising the following steps:
/1/ selecting a transmitter coding scheme in a library (10) of several modulation and coding schemes which includes modulation and coding schemes that each implement or not superposition coding; and
/2/ transmitting the data from one of the communication units (1) to the other communication unit (2) using the transmitter coding scheme,
**characterized in that** step /1/ comprises the following sub-steps:
/1-1/ assessing at least two communication criteria for each of at least two modulation and coding schemes contained in the library (10); and
/1-2/ selecting the transmitter coding scheme to be used in step /2/ among the at least two modulation and coding schemes involved with sub-step /1-1/, according to a trade-off rule applied to the at least two communication criteria.

2. The process of claim 1, wherein the at least two communication criteria comprise for each modulation and coding scheme:
a forecast throughput value relating to data transmission using the modulation and coding scheme; and
a parameter quantifying fluctuations of an effective rate relating to data transmission using the modulation and coding scheme, called fluctuation parameter.

3. The process of claim 2, wherein the fluctuation parameter is a variance or standard deviation of the effective rate relating to the data transmission, or an outage probability of the data transmission.

4. The process of claim 2 or 3, wherein the forecast throughput value is an expected effective rate relating to the data transmission.

5. The process of one of claims 2 to 4, wherein the trade-off rule applied in sub-step /1-2/ comprises selecting the modulation and coding scheme that achieves a highest forecast throughput value for a given value of the fluctuation parameter, or comprises selecting a lowest value of the fluctuation parameter for a given forecast throughput value.

6. The process of one of claims 2 to 5, wherein the trade-off rule applied in sub-step /1-2/ further involves at least one another criterion in addition to the forecast throughput value and the fluctuation parameter for selecting the transmitter coding scheme, the another criterion belonging to a criteria list comprised of an implementation complexity of the modulation and coding scheme, and an operational performance loss of the modulation and coding scheme due to operational constraints related to superposition coding.

7. The process of one of the preceding claims, wherein the at least two modulation and coding schemes involved with sub-step /1-1/ are each determined by:
a forecast throughput value if the modulation and coding scheme does not implement superposition coding; or
if the modulation and coding scheme implements superposition coding: a key for determining a distribution of a transmission power between base modulation and coding schemes that are superposed, and a respective forecast throughput value for each of said base modulation and coding schemes.

8. The process of one of the preceding claims, wherein an interference model is used for assessing the at least two criteria for each of the at least two modulation and coding schemes involved with sub-step /1-1/.

9. The process of claim 8, wherein the interference model comprises setting a plurality of interference levels with a respective probability value allocated to each interference level, the probability value quantifying a probability for the corresponding interference level to be effective at any time.

10. The process of claim 9, wherein within each of the at least two modulation and coding schemes that is involved with sub-step /1-1/ and that implements superposition coding, a number of the base modulation and coding schemes that are superposed is less than or equal to a number of the interference levels set by the interference model.

11. A communication unit (1) configured for transmitting data to a recipient communication unit (2) using a transmitter coding scheme, the communication unit comprising:
- means for storing a library (10) of several modulation and coding schemes which includes modulation and coding schemes that each implement or not superposition coding;
- means for assessing at least two criteria for each of at least two modulation and coding schemes from the library (10); and
- means for selecting the transmitter coding scheme (12) among the at least two modulation and coding schemes, according to a trade-off rule applied to the at least two communication criteria.

12. The communication unit (1) of claim 11, wherein
the means for assessing the at least two criteria are configured for implementing a theoretical performance prediction model (11) that calculates the at least two criteria for each modulation and coding scheme inputted into the theoretical performance prediction model, the theoretical performance prediction model possibly using an interference model that sets a plurality of interference levels with a respective probability value allocated to each interference level, the probability value quantifying a probability for the corresponding interference level to be effective at any time; and
the means for selecting the transmitter coding scheme (12) are configured for receiving the at least two criteria for each modulation and coding scheme as calculated by the theoretical performance prediction model (11), and possibly further receiving at least one another criterion for each modulation and coding scheme, said another criterion belonging to a criteria list comprised of an implementation complexity of the modulation and coding scheme, and an operational performance loss of the modulation and coding scheme due to operational constraints related to superposition coding.

13. The communication unit (1) of claim 11 or 12, configured for implementing a process according to one of claims 1 to 10.

14. A computer program product for selecting a transmitter coding scheme, comprising code instructions such that when run by a processor, said computer program product causes the processor to:
- receive at least two communication criteria for each of at least two modulation and coding schemes; and
- selecting the transmitter coding scheme among the at least two modulation and coding schemes, according to a trade-off rule applied to the at least two communication criteria.

15. A computer program product for implementing a theoretical performance prediction model (11), comprising code instructions such that when run by a processor, said computer program product causes the processor to:
- receive an interference model setting a number of interference levels with a respective probability value allocated to each interference level, the probability value quantifying a probability for the corresponding interference level to be effective at any time;
- receive a modulation and coding scheme; and
- calculating at least two communication criteria for the received modulation and coding scheme, using the interference model.
